# FASCICULE DE BREVET EUROPEEN

(11) **EP 3 513 294 B1**
(45) Date de publication et mention de la délivrance du brevet: **21.04.2021**
(21) Numéro de dépôt: 17768493.3
(22) Date de dépôt: 01.09.2017
(51) Int. Cl.: G06F 11/07

(54) **DISPOSITIF DE CONTROLE DE LA REINITIALISATION D'UN CALCULATEUR EMBARQUE AUTOMOBILE**
VORRICHTUNG ZUR STEUERUNG DER REINITIALISIERUNG EINES COMPUTERS AN BORD EINES FAHRZEUGES
DEVICE FOR CONTROLLING THE REINITIALIZATION OF A COMPUTER ON BOARD AN AUTOMOBILE

(30) Priorité: 13.09.2016 FR 1658541
(43) Date de publication de la demande: 24.07.2019
(73) Titulaire: PSA Automobiles SA, 78300 Poissy (FR)
(72) Inventeur: LEDEZ, Frederic, 78350 Jouy En Josas (FR); FUSINELLI, Sebastien, 95540 Mery Sur Oise (FR)
(74) Mandataire: Jeannin, Laurent Jean-Pierre
(86) Numéro de dépôt international: PCT/FR2017/052321
(87) Numéro de publication internationale: WO 2018/050984

(56) Documents cités:
- US-A- 4 386 427
- US-A- 4 532 594
- US-A- 6 134 655

## Description

L'invention concerne, de façon générale, le contrôle du bon fonctionnement d'un microprocesseur ou d'un microcontrôleur d'un calculateur, notamment embarqué dans un véhicule. L'invention vise par conséquent un dispositif de contrôle de la réinitialisation d'un calculateur, destiné plus particulièrement aux véhicules automobiles.

De manière connue, un véhicule automobile comprend une pluralité d'organes fonctionnels pilotés par un dispositif de commande, désigné calculateur. Un tel calculateur permet par exemple d'activer la commande des feux du véhicule (feux de stop, clignotants, etc.) ou les commandes des essuie-vitres avant et arrière.

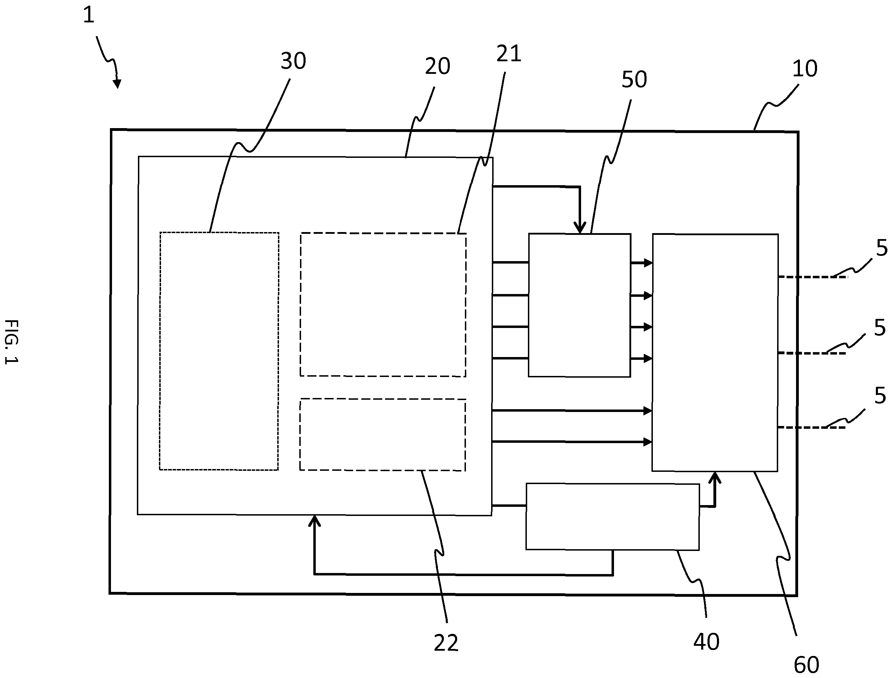

En référence à la figure 1, un calculateur comporte un module de commande, comprenant un microcontrôleur ou un microprocesseur, assurant une pluralité de fonctions permettant de piloter des organes fonctionnels du véhicule. Selon le contexte (luminosité, température, etc.), ces fonctions se trouvent dans un état actif ou inactif. Cependant, comme cela est connu, un tel calculateur peut parfois présenter des disfonctionnements.

Selon l'état de la technique, un dispositif de surveillance, désigné communément « chien de garde », ou « watchdog » en anglais, peut être intégré au calculateur afin de surveiller son bon état de fonctionnement. Le document FR 2770917 décrit ainsi un système de contrôle d'un calculateur de véhicule comprenant un dispositif de surveillance. Un tel dispositif de surveillance permet de surveiller l'état de fonctionnement des fonctions du module de commande du calculateur. Le système de contrôle décrit dans ce document comprend en outre des moyens de réinitialisation de l'ensemble des fonctions du module de commande en cas de détection d'un disfonctionnement.

Un tel dispositif de surveillance fonctionne typiquement par la diffusion d'un signal émis périodiquement par le module de commande, permettant de réarmer régulièrement une minuterie. Lorsqu'une action du module de commande est trop longue à être effectuée, le signal n'est pas émis et la minuterie continue son décompte jusqu'à son terme. Le dispositif de surveillance commande alors une réinitialisation automatique du calculateur lorsque le signal n'est plus émis et que la minuterie n'est pas réarmée.

Au cours de la réinitialisation d'un calculateur, certaines des fonctions précitées du module de commande doivent être conservées ou placées dans un état défini dans le but d'assurer la sécurité des passagers du véhicule et/ou de ne pas perturber le conducteur alors que d'autres fonctions peuvent être interrompues. Il est alors connu de différencier les fonctions dites « maintenues », lorsque la fonction correspondante doit être contrôlée dans un état de sortie précis - actif, inactif ou toute autre valeur, ou rester dans un état inchangé - pendant la réinitialisation du calculateur, et les fonctions dites « interruptibles », lorsque la fonction correspondante peut être désactivée, quel que soit son état (actif, inactif ou toute autre valeur), pendant la réinitialisation du calculateur. Autrement dit, on désigne par fonctions « maintenues » pendant la réinitialisation les fonctions devant être contrôlées, à savoir forcées dans un état, actif, inactif ou toute autre valeur, ou inchangées, c'est-à-dire maintenues dans un état identique à l'état avant réinitialisation. On désigne par fonctions « interruptibles » les fonctions pouvant être interrompues pendant la réinitialisation, c'est-à-dire dont l'état de sortie importe peu pendant la réinitialisation.

A titre d'exemples non limitatifs, des fonctions devant être maintenues, c'est-à-dire contrôlées dans un état de sortie, lors de la réinitialisation du calculateur, correspondent aux feux de circulation du véhicule qui doivent rester actifs en cas de circulation dans des conditions nocturnes ou encore l'avertisseur sonore qui doit au contraire être conservé dans un état inactif tout au long de la réinitialisation.

Cependant, ce maintien des fonctions maintenues dans un état contrôlé (actif, inactif ou toute autre valeur) ou inchangé pendant la phase de réinitialisation peut nécessiter l'utilisation de composants électroniques supplémentaires. En particulier pour chacune des fonctions maintenues dans un état inchangé, il est connu d'utiliser par exemple un démultiplexeur comprenant un module de mémorisation, désigné « latch ». Un tel démultiplexeur commande les signaux émis par les fonctions du module de commande et les répartit sur les voies auxquelles ils sont destinés (maintenues actives ou inactives par exemple). Autrement dit, un tel ensemble de démultiplexeurs permet de trier des états des sorties des fonctions maintenues, entre celles maintenues actives, celles maintenues inactives et celles maintenues inchangées. En outre, le latch permet la mémorisation de cet état des sorties des fonctions maintenues demandé par le module de commande.

Un tel dispositif de surveillance « chien de garde » comprend ainsi un latch pour chacune des fonctions devant être forcées ou maintenues dans un état inchangé, ce qui présente l'inconvénient d'utiliser un grand nombre de composants électroniques. De plus, un tel calculateur, comprenant autant de composants, présente un coup élevé. On connait aussi par le document US4386427 un dispositif de sécurité intégrée dans un système de commande électronique pour un véhicule automobile comprenant un dispositif de surveillance pour détecter une défaillance du CPU et générer un signal indiquant une erreur dans le CPU, et un dispositif de stockage pour produire des données pour remplacer la sortie du CPU tandis que le CPU est opérationnel. Ainsi, le système de commande peut fonctionner pour commander un dispositif de commande de véhicule même en cas de panne d'unité centrale.

L'invention vise donc à pallier ces inconvénients en proposant un module de commande moins onéreux, nécessitant peu de composants électroniques.

Plus précisément, pour parvenir à ce résultat, la présente invention concerne un dispositif de contrôle pour un calculateur embarqué, en particulier pour véhicule automobile, ledit dispositif de contrôle étant apte à coopérer avec le calculateur pour assurer une pluralité de fonctions, lesdites fonctions de ladite pluralité de fonctions fournissant respectivement des sorties correspondant à des sorties du calculateur, ledit dispositif de contrôle comprenant :
- un module de commande,
- un module de réinitialisation, adapté pour réinitialiser ledit module de commande, sur réception d'un signal de réinitialisation, ladite réinitialisation présentant une durée de réinitialisation inférieure à une durée maximale de réinitialisation prédéterminée, et
- un module de surveillance, apte à détecter un disfonctionnement du calculateur, ledit module de surveillance étant adapté pour envoyer le signal de réinitialisation audit module de réinitialisation en cas de détection d'un disfonctionnement,
   le dispositif de contrôle étant remarquable en ce que le module de commande comprend un sous-module d'au moins une fonction temporairement interruptible, ladite au moins une fonction temporairement interruptible présentant une durée maximale autorisée d'interruption supérieure à ladite durée maximale de réinitialisation prédéterminée, pendant laquelle les sorties de ladite au moins une fonction temporairement interruptible ne sont pas fournies.

Un tel dispositif de contrôle permet d'utiliser une moindre quantité de composants électroniques, permettant ainsi l'utilisation d'un calculateur moins onéreux.

De manière avantageuse, le module de commande comprend par ailleurs un sous-module de fonctions maintenues et un sous-module de fonctions interruptibles, les sorties desdites fonctions maintenues étant sauvegardées et fournies pendant une réinitialisation du calculateur et lesdites fonctions interruptibles étant interrompues pendant une réinitialisation du calculateur sans limitation de durée. Ainsi le module de commande permet de classer les fonctions en trois groupes distincts : les fonctions maintenues, les fonctions interruptibles et les fonctions temporairement interruptibles.

Avantageusement, le dispositif de contrôle comprend un module de mémorisation des sorties des fonctions maintenues commandées par le module de commande, permettant de garder en mémoire l'état des fonctions demandé.

Avantageusement, le dispositif de contrôle comprend un module de commutation apte à assurer la commutation des sorties du calculateur permettant aux sorties du calculateur de correspondre aux sorties des fonctions du module de commande.

De manière avantageuse, le calculateur comprend le module de commande.

Avantageusement, le calculateur comprend le module de réinitialisation.

De manière avantageuse, le calculateur comprend le module de surveillance.

De manière avantageuse, le calculateur comprend le module de mémorisation.

Avantageusement, le calculateur comprend le module de commutation.

L'invention concerne également un véhicule comprenant un dispositif de contrôle selon un mode de réalisation de l'invention.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, un schéma d'un dispositif de contrôle selon l'art antérieur, et
- la figure 2, un schéma d'un dispositif de contrôle selon une forme de réalisation préférée de l'invention.

Dans ce qui va suivre, les formes de réalisation décrites s'attachent plus particulièrement à une mise en œuvre du dispositif selon l'invention au sein d'un véhicule automobile. Cependant, toute mise en œuvre dans un contexte différent, en particulier dans tout type de véhicule, est également visée par la présente invention.

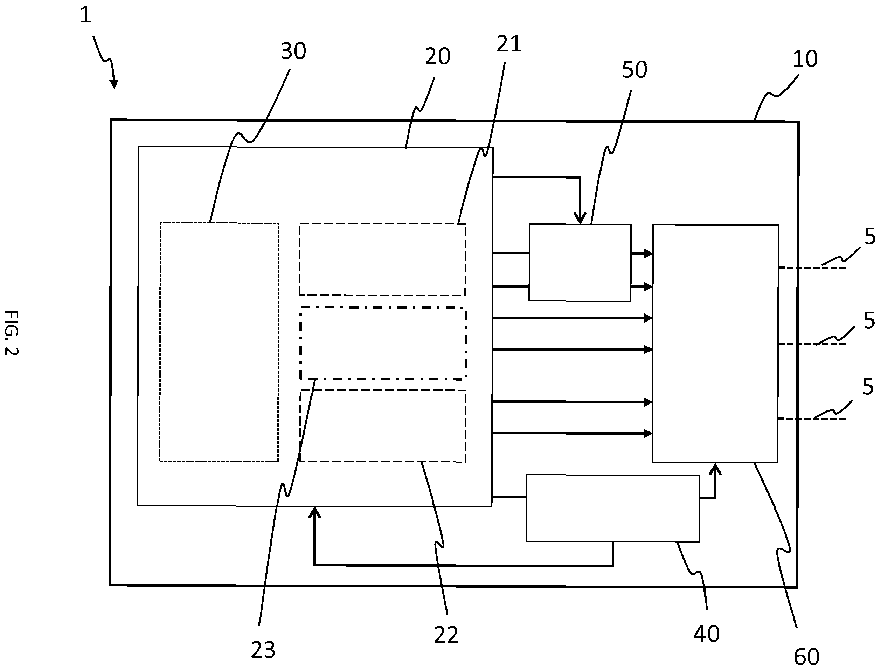

La figure 2 représente un calculateur 10 comprenant un module de commande 20 assurant le pilotage d'organes fonctionnels d'un véhicule, plus particulièrement d'un véhicule automobile, selon une forme de réalisation préférée, non limitative, de l'invention.

A cet effet, comme décrit précédemment, un véhicule automobile comprend une pluralité d'organes fonctionnels pilotés par un calculateur 10. Le calculateur 10, généralement connu sous le nom d'Unité de Commande Electronique (UCE) ou Electronic Control Unit (ECU) en langue anglaise, est un système embarqué qui contrôle l'ensemble des dispositifs d'un véhicule automobile. Un tel calculateur 10, pouvant présenter un disfonctionnement, comprend typiquement un dispositif de contrôle 1 coopérant avec le calculateur 10 pour assurer le pilotage d'un certain nombre de fonctions. Intégré ou non au calculateur 10, un module de surveillance 40, souvent désigné « watchdog », signifiant « chien de garde » en langue anglaise, est apte à détecter un disfonctionnement et à réinitialiser le calculateur 10, comme cela est connu de l'homme de l'art.

Selon une forme de réalisation préférée, en référence à la figure 2, un tel dispositif de contrôle 1 comprend :
- un module de commande 20, définissant un état des sorties des fonctions,
- un module de réinitialisation 30, réinitialisant le calculateur 10 en cas de détection d'un disfonctionnement,
- un module de surveillance 40, envoyant un signal de réinitialisation au module de réinitialisation 30 en cas de détection d'un disfonctionnement du calculateur 10,
- un module de mémorisation 50, permettant de garder en mémoire l'état des sorties des fonctions demandé par le module de commande 20, et
- un module de commutation 60, permettant d'assurer la correspondance entre les sorties des fonctions et les sorties 5 du calculateur 10, lesdites sorties des fonctions étant reçues directement du module de commande 20 ou reçues du module de mémorisation 50.

Le module de commande 20, comprenant un microcontrôleur ou un microprocesseur, assure, à l'aide de ressources matérielles du calculateur 10, une pluralité de fonctions. Chacune de ces fonctions présente un état de sortie, typiquement actif, inactif ou inchangé, associé à un organe fonctionnel du véhicule, tels que les moyens de signalisation et/ou d'éclairage, les essuie-vitres, etc. Comme décrit précédemment, au cours de la réinitialisation d'un calculateur 10, certaines fonctions, désignées fonctions maintenues 21, doivent être dans un état contrôlé (forcé ou inchangé). Cet état peut être maintenu volontairement actif, comme les feux de circulation ou les essuie-vitres indispensables par temps de pluie, maintenu inactif ou maintenu dans un état inchangé, identique à l'état avant réinitialisation.

D'autres fonctions, n'impactant pas la sécurité des passagers ou le confort du conducteur, désignées fonctions interruptibles 22, sont définies comme étant des fonctions interruptibles, c'est-à-dire pouvant être désactivées. L'interruption d'une fonction signifie que l'organe fonctionnel associé est désactivé au cours de la réinitialisation du calculateur 10. Autrement dit, l'organe fonctionnel associé à la fonction interrompue n'est pas piloté, l'état de sortie de a fonction associé (typiquement, actif ou inactif) important peu.

Selon l'invention, le module de commande 20 comprend également une pluralité de fonctions, désignées fonctions temporairement interruptibles 23, dont l'interruption temporaire n'impacte ni la sécurité des passagers, ni le confort du conducteur, à condition que cette interruption n'excède pas une durée maximale prédéterminée correspondant à une durée d'interruption autorisée desdites fonctions.

A cette fin, chaque fonction est prévue, en conception, pour pouvoir être interrompue ou non, et, lorsqu'elle peut être interrompue, il est déterminé s'il existe une durée maximale d'interruption. Cette classification des fonctions assurées par le module de commande 20 tient compte, en particulier, de la sécurité du véhicule et des passagers, ainsi que du confort des passagers.

Toujours en référence à la figure 2, le module de commande 20 permet ainsi de classer les fonctions assurées par le module de commande 20 à l'aide des ressources matérielles du calculateur 10 en trois catégories distinctes de manière à former trois groupes de fonctions. Ces trois groupes permettent de définir une gestion des états des sorties pour chaque fonction en cas de réinitialisation du calculateur 10. Ainsi, le module de commande 20 comprend :
- un sous-module de fonctions maintenues 21,
- un sous-module de fonctions interruptibles 22, et
- un sous-module de fonctions temporairement interruptibles 23.

Selon l'invention, lors d'une réinitialisation du calculateur 10, les fonctions maintenues 21 sont contrôlées dans un état défini actif, inactif ou inchangé. Une telle fonction maintenue 21 est typiquement activée ou désactivée de manière volontaire ou encore conservée dans un état identique à son état avant réinitialisation. Les fonctions interruptibles 22 peuvent être désactivées pendant toute la réinitialisation du calculateur 10, tout comme les fonctions temporairement interruptibles 23, déterminées, au moment de la conception du calculateur 10, comme ayant une durée d'interruption acceptable supérieure à la durée maximale de réinitialisation du calculateur 10.

Au cours de cette réinitialisation, il convient de mémoriser l'état de sortie précité des fonctions maintenues 21 du module de commande 20. A cette fin, le calculateur 10 comprend un module de mémorisation 50, comprenant une pluralité de blocs de mémorisation communément désignés « latches », signifiant « loquets » en langue anglaise. Un tel module de mémorisation 50 permet de lire l'état demandé des fonctions maintenues 21, typiquement actif, inactif ou toute autre valeur, et de mémoriser cet état. En pratique, le module de mémorisation 50 comprend un latch par fonction maintenue 21.

Le dispositif de contrôle 1 selon une forme préférée de réalisation de l'invention comprend également un module de surveillance 40, communément désigné « chien de garde » ou « watchdog » en langue anglaise. Un tel module de surveillance 40 permet de surveiller le bon état de fonctionnement de l'ensemble des modules et des fonctions du calculateur 10.

En pratique, un module de surveillance 40 comprend typiquement une minuterie couplée à un circuit électronique ou un logiciel spécialisé permettant de s'assurer que le calculateur 10 ne reste pas bloqué en effectuant une liste d'actions. Le fonctionnement du circuit électronique repose typiquement sur le principe que chaque étape doit s'effectuer en un temps maximal prédéterminé. A la fin de chaque étape, un signal est envoyé au calculateur 10 permettant la remise à zéro de la minuterie. Si le temps de réalisation d'une action dépasse la durée prédéterminée, alors aucun signal n'est envoyé.

Un tel signal est typiquement envoyé à un module de réinitialisation 30, désigné « Reset ». Selon un mode de réalisation préféré, en référence à la figure 2, le module de commande 20 comprend le module de réinitialisation 30. Un tel module de réinitialisation 30 permet de lire le signal envoyé par le module de surveillance 40. En cas de disfonctionnement du calculateur 10, le module de réinitialisation 30 active la réinitialisation du calculateur 10. Selon le mode de réalisation préférée décrit dans ce document, la réinitialisation du calculateur 10 est réalisée par l'intermédiaire de la réinitialisation du module de commande 20.

Enfin, le dispositif de contrôle 1 selon une forme de réalisation de l'invention comprend un module de commutation 60 assurant la commutation des sorties 5 du calculateur 10 associées aux fonctions du module de commande 20.

La forme de réalisation décrite dans ce document présente un calculateur 10 comprenant un dispositif de contrôle 1 et comprenant à ce titre le module de commande 20, le module de réinitialisation 30, le module de surveillance 40, le module de mémorisation 50 et le module de commutation 60, mais il va de soi qu'un tel dispositif de contrôle 1 ou chacun des modules du dispositif de contrôle 1 pourrait être inclus à un véhicule hors du calculateur 10.

## Revendications

1. Système embarqué dans un véhicule, ledit système comprenant :
- un calculateur (10)
- un dispositif de contrôle (1) étant apte à coopérer avec le calculateur (10) pour assurer une pluralité de fonctions, lesdites fonctions de ladite pluralité de fonctions fournissant respectivement des sorties correspondant à des sorties (5) du calculateur (10), chacune de ces fonctions présentant un état de sortie, ledit dispositif de contrôle (1) comprenant :
- un module de commande (20),
- un module de réinitialisation (30), adapté pour réinitialiser ledit module de commande (20), sur réception d'un signal de réinitialisation, ladite réinitialisation présentant une durée de réinitialisation inférieure à une durée maximale de réinitialisation prédéterminée, et
- un module de surveillance (40), communément désigné « chien de garde », apte à détecter un disfonctionnement du calculateur (10), ledit module de surveillance (40) étant adapté pour envoyer le signal de réinitialisation audit module de réinitialisation (30) en cas de détection d'un disfonctionnement,
et où le module de commande (20) comprend un sous-module d'au moins une fonction temporairement interruptible (23), ladite au moins une fonction temporairement interruptible (23) présentant une durée maximale autorisée d'interruption supérieure à ladite durée maximale de réinitialisation prédéterminée, pendant laquelle les sorties de ladite au moins une fonction temporairement interruptible (23) ne sont pas fournies et en ce que le module de commande (20) comprend par ailleurs un sous-module de fonctions maintenues (21) et un sous-module de fonctions interruptibles (22), les sorties desdites fonctions maintenues (21) étant sauvegardées et fournies pendant une réinitialisation du calculateur (10) et lesdites fonctions interruptibles (22) et fonctions temporairement interruptibles (23) étant interrompues pendant une réinitialisation du calculateur (10) sans limitation de durée.

2. Système selon la revendication 1, dans lequel le dispositif de contrôle comprend un module de mémorisation (50) des sorties des fonctions maintenues (21) commandées par le module de commande (20).

3. Système selon l'une des revendications précédentes, dans lequel le dispositif de contrôle comprend un module de commutation (60) apte à assurer la commutation des sorties (5) du calculateur (10) de manière à correspondre aux sorties des fonctions.

4. Système selon l'une des revendications précédentes, dans lequel le calculateur (10) comprend le module de commande (20).

5. Système selon l'une des revendications précédentes, dans lequel le calculateur (10) comprend le module de réinitialisation (30).

6. Système selon l'une des revendications précédentes, dans lequel le calculateur (10) comprend le module de surveillance (40).

7. Système selon l'une des revendications précédentes, dans lequel le calculateur (10) comprend le module de mémorisation (50).

8. Système selon l'une des revendications précédentes, dans lequel le calculateur (10) comprend le module de commutation (60).

9. Véhicule comprenant un système selon l'une des revendications précédentes.

## Patentansprüche

1. Ein On-Board-System in einem Fahrzeug, wobei das System umfasst:
- einen Computer (10)
- eine Steuervorrichtung (1), die in der Lage ist, mit dem Computer (10) zusammenzuarbeiten, um eine Vielzahl von Funktionen auszuführen, wobei die Funktionen der Vielzahl von Funktionen jeweils Ausgänge bereitstellen, die den Ausgängen (5) des Computers (10) entsprechen, wobei jede dieser Funktionen einen Ausgangszustand aufweist, wobei die Steuervorrichtung (1) umfasst:
- einem Steuermodul (20),
- ein Rücksetzmodul (30), das geeignet ist, das Steuermodul (20) bei Empfang eines Rücksetzsignals zurückzusetzen, wobei das Rücksetzen eine Rücksetzzeit hat, die kleiner ist als eine vorbestimmte maximale Rücksetzzeit, und
- ein Überwachungsmodul (40), das üblicherweise als "Watchdog" bezeichnet wird und in der Lage ist, eine Fehlfunktion des Computers (10) zu erkennen, wobei das Überwachungsmodul (40) so beschaffen ist, dass es im Falle der Erkennung einer Fehlfunktion das Rücksetzsignal an das Rücksetzmodul (30) sendet, und wobei das Steuermodul (20) ein Untermodul mit mindestens einer vorübergehend unterbrechbaren Funktion (23) umfasst, wobei die mindestens eine vorübergehend unterbrechbare Funktion (23) eine maximal zulässige Unterbrechungsdauer hat, die größer ist als die vorgegebene maximale Rücksetzdauer, dass das Steuermodul (20) ferner ein Untermodul (21) für aufrechterhaltene Funktionen und ein Untermodul (22) für unterbrechbare Funktionen umfasst, wobei die Ausgänge der aufrechterhaltenen Funktionen (21) während eines Rücksetzens des Computers (10) gespeichert und bereitgestellt werden und die unterbrechbaren Funktionen (22) und die vorübergehend unterbrechbaren Funktionen (23) während eines Rücksetzens des Computers (10) ohne zeitliche Begrenzung unterbrochen werden.

2. System nach Anspruch 1, wobei die Steuereinrichtung ein Speichermodul (50) zur Speicherung der Ausgänge der von dem Steuermodul (20) gesteuerten Haltefunktionen (21) umfasst.

3. System nach einem der vorhergehenden Ansprüche, bei dem die Steuereinrichtung ein Schaltmodul (60) umfasst, das die Ausgänge (5) des Rechners (10) so schalten kann, dass sie den Ausgängen der Funktionen entsprechen.

4. System nach einem der vorhergehenden Ansprüche, wobei der Computer (10) das Steuermodul (20) umfasst.

5. System nach einem der vorhergehenden Ansprüche, wobei der Computer (10) das Reset-Modul (30) enthält.

6. System nach einem der vorhergehenden Ansprüche, wobei der Computer (10) das Überwachungsmodul (40) enthält.

7. System nach einem der vorhergehenden Ansprüche, wobei der Computer (10) das Speichermodul (50) umfasst.

8. System nach einem der vorhergehenden Ansprüche, wobei der Computer (10) das Schaltmodul (60) umfasst.

9. Fahrzeug mit einem System nach einem der vorangehenden Ansprüche.

## Claims

1. An in-vehicle system in a vehicle, said system comprising :
- a computer (10)
- a control device (1) being able to cooperate with the computer (10) to perform a plurality of functions, said functions of said plurality of functions respectively providing outputs corresponding to outputs (5) of the computer (10), each of these functions having an output state, said control device (1) comprising :
- a control module (20),
- a reset module (30), adapted to reset said control module (20) upon receipt of a reset signal, said reset having a reset time less than a predetermined maximum reset time, and
- a monitoring module (40), commonly referred to as a "watchdog", adapted to detect a malfunction of the computer (10), said monitoring module (40) being adapted to send the reset signal to said reset module (30) if a malfunction is detected, and wherein the control module (20) comprises a sub-module of at least one temporarily interruptible function (23), said at least one temporarily interruptible function (23) having a maximum permitted duration of interruption greater than said predetermined maximum reset duration, during which the outputs of said at least one temporarily interruptible function (23) are not provided and in that the control module (20) further comprises a maintained functions sub-module (21) and an interruptible functions sub-module (22), the outputs of said maintained functions (21) being saved and provided during a reset of the computer (10) and said interruptible functions (22) and temporarily interruptible functions (23) being interrupted during a reset of the computer (10) without time limitation.

2. A system according to claim 1, wherein the control device comprises a storage module (50) for storing the outputs of the maintained functions (21) controlled by the control module (20).

3. System according to one of the preceding claims, in which the control device comprises a switching module (60) capable of switching the outputs (5) of the computer (10) so as to correspond to the outputs of the functions.

4. System according to one of the preceding claims, in which the computer (10) comprises the control module (20).

5. A system according to one of the preceding claims, in which the computer (10) includes the reset module (30).

6. A system according to one of the preceding claims, wherein the computer (10) includes the monitoring module (40).

7. A system according to one of the preceding claims, wherein the computer (10) includes the storage module (50).

8. A system according to one of the preceding claims, wherein the computer (10) includes the switching module (60).

9. Vehicle comprising a system according to one of the preceding claims.
